# EUROPÄISCHE PATENTSCHRIFT

(11) **EP 0 630 902 B1**
(45) Veröffentlichungstag und Bekanntmachung des Hinweises auf die Patenterteilung: **13.01.1999**
(21) Anmeldenummer: 94109144.9
(22) Anmeldetag: 15.06.1994
(51) Int. Cl.: C07F 7/08, C11D 1/00

(54) **Silane mit hydrophilen Gruppen, deren Herstellung und Verwendung als Tenside in wässrigen Medien**
Silanes containing hydrophilic groups, their preparation and use as surfactants in aqueous media
Silanes contenant des groupements hydrophiliques, leur préparation et utilisation comme agents tensioactifs dans des milieux aqueux

(30) Priorität: 24.06.1993 DE 4320920
(43) Veröffentlichungstag der Anmeldung: 28.12.1994
(73) Patentinhaber: Th. Goldschmidt AG, 45127 Essen (DE)
(72) Erfinder: Klein, Klaus-Dieter, Dr., D-45468 Mülheim (DE); Knott, Wilfried, Dr., D-45141 Essen (DE); Koerner, Götz, Dr., D-45259 Essen (DE)

(56) Entgegenhaltungen:
- EP-A- 0 394 963
- GB-A- 2 203 152
- US-A- 2 629 727
- CHEMICAL ABSTRACTS, vol. 83, no. 8, 25. August 1975, Columbus, Ohio, US; abstract no. 62401d, TAKAHASHI, H. ET AL. 'STRUCTURAL EFFECTS ON THE PROPERTIES OF NONIONIC SURFACTANTS. IX. SYNTHESES AND SOME SURFACE ACTIVE PROPERTIES OF BIS /7,7-DIMETHYL-2-OXA-7-SI LAOCTYL)METHYLPOLY(OXYETHYLENE) MONOETHERS' Seite 241 ; & YUKAGAKU, Bd.24, Nr.5, 1975 Seiten 306 - 310
- CHEMICAL ABSTRACTS, vol. 73, no. 4, 27. Juli 1970, Columbus, Ohio, US; abstract no. 16624z, MAKI, H. ET AL. 'SYNTHESES AND PROPERTIES OF SURFACTANTS CONTAINING ORGANOMETALLIC COMPOUNDS. VI. SYNTHESES AND PROPERTIES OF SURFACTANTS WITH THREE-CHAINED HYDROPHOBIC GROUPS CONTAINING ORGANOTIN AND ORGANOSILICON COMPOUNDS' Seite 107 ; & YUKAGAKU, Bd.19, Nr.4, 1970 Seiten 245 - 251
- ZHURNAL OBSHCHEI KHIMII, Bd.47, Nr.8, 1977 Seiten 1811 - 1812 MUSTAFAEV, S.N. ET AL. 'SYNTHESIS AND SOME REACTIONS OF UNSYMMETRICAL FORMALS OF 3-(TRIMETHYLSILYL)-1-PROPANOL'

## Beschreibung

Die Erfindung betrifft neuartige Silane mit hydrophilen Gruppen, deren Herstellung und deren Verwendung als Tenside in wäßrigen Medien. Sie betrifft insbesondere hydrolysestabile Silantenside mit hoher Erniedrigung der Oberflächenspannung wäßriger Medien. Dabei sind unter dem Begriff der "wäßrigen" Medien auch solche Medien zu verstehen, die überwiegend aus Wasser bestehen und zusätzlich wasserlösliche oder mit Wasser mischbare organische Lösungsmittel enthalten können.

Es ist aus dem Stand der Technik bekannt, daß organomodifizierte Siloxane, wie z.B. Polyethersiloxane oder Polysiloxane, welche Substituenten mit anionischen, kationischen oder amphoteren Gruppen aufweisen, bei entsprechend ausgewählter Struktur und ausgewogenem Verhältnis hydrophiler und hydrophober Gruppen die Oberflächenspannung wäßriger Lösungen in ausgeprägtem Maße erniedrigen können.

Tenside mit mindestens drei Siliciumatomen sind in der DE-PS 41 41 046 beschrieben. Sie entsprechen dabei der allgemeinen Formel 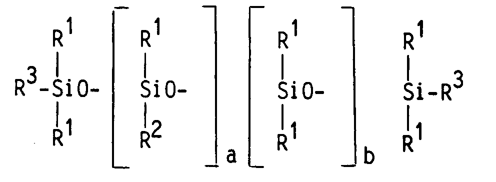
- R¹ =: Methyl- oder Phenylrest, wobei jedoch mindestens 90 % der R¹-Reste Methylreste sind,
- R² =: R¹ oder = -(CH₂)₆-OSO₃⁻.M⁺, M⁺ = Alkali-, 1/2 Erdalkali- oder gegebenenfalls alkylsubstituiertes Ammonium-Ion,
- R³ =: R¹ oder R², mit der Maßgabe, daß im durchschnittlichen Molekül mindestens 1 Rest R² oder R³ ein -(CH₂)₆-OSO₃⁻.M⁺ Rest ist,
- a =: 0 bis 5 und
- b =: 0 bis 5.

Die ausgewählten, im Falle der Anwesenheit dreier Siliciumatome, Trisiloxanhexylsulfate bewirken in neutralen wäßrigen Medien eine ausgezeichnete Erniedrigung der Grenzflächenspannung auf Werte um 21 mN/m. Sie sind jedoch in sauren oder alkalischen Lösungen nicht beständig und verlieren durch Hydrolyse der Si-O-Si-Bindungen und erneute Kondensation der Hydrolyseprodukte zu höhermolekularen Oligomeren sehr schnell ihre Wirksamkeit und werden teilweise in wäßrigen Medien unlöslich.

Tenside mit niedrigem Gehalt an Siliciumatomen sind ferner in der EP-OS 0 367 381 (A2) und der GB-PS 1 520 421 beschrieben:

Die EP-OS 0 367 381 (A2) betrifft Organosiliciumverbindungen der allgemeinen Formel 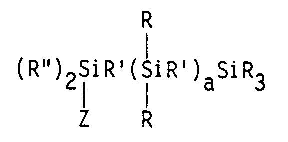 wobei R unabhängig voneinander einen Alkyl-, Aryl-, halogenierten Alkyl-oder halogenierten Arylrest, mit bis zu 18 Kohlenstoffatomen bedeutet, jedes R' eine Alkylengruppe darstellt, welche die benachbarten Siliciumatome durch bis zu 6 Kohlenstoffatome voneinander trennt, und wobei R'' unabhängig voneinander die Bedeutung von R hat oder, wenn a = Null ist, die Gruppe R₃SiR'- bedeutet. Z ist ein hydrophiler Substituent, der Schwefel, Stickstoff oder Phosphor enthält, eine carboxyfunktionelle Gruppe oder deren Salz. a hat einen Wert von 0, 1 oder 2.

Hieraus folgt, daß der siliciumorganische Rest definitionsgemäß mindestens zwei Siliciumatome enthält. Die Herstellung dieser Carbosilane ist relativ aufwendig und erfolgt beispielsweise durch Grignard-analoge Verfahren. Danach werden mittels Hydrosilylierung von beispielsweise Allylglycidylether oder Allylamin und an sich bekannten Folgereaktionen Carbosilantenside mit quaternärer, Sulfonat- oder Betainstruktur synthetisiert. Die so erhaltenen Substanzen erniedrigen die Oberflächenspannung einer 1 %igen Lösung in destilliertem Wasser auf 23 bis 25 mN/m.

In der GB-PS 1 520 421 werden Carbosilantenside und deren Herstellung beschrieben. Sie weisen die allgemeine Formel 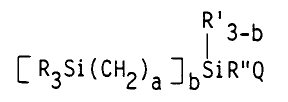 auf.
- R: ist ein Methyl-, Ethyl-, Propyl- oder Trifluorpropylrest, wobei jedoch wenigstens 50 % der Reste R Methylreste sind,
- R': ist ein Alkylrest mit 1 bis 6 Kohlenstoffatomen,
- R'': ist ein zweiwertiger aliphatischer Kohlenwasserstoffrest mit 2 bis 6 Kohlenstoffatomen, der Q und das benachbarte Siliciumatom durch eine Brücke von mindestens 2 Kohlenstoffatomen verbindet,
- Q: ist dabei die Gruppe -O(C₂H₄O)_{c}X, wobei c einen Wert von 3 bis 12 hat und X ein Wasserstoffrest, der Rest R''', 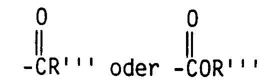 oder ist, in welchem R''' ein Alkylrest mit 1 bis 5 Kohlenstoffatomen ist, und
- a: = 1 oder 2 und b = 2 oder 3 ist.

Auch hier müssen definitionsgemäß mindestens zwei Siliciumatome vorhanden sein. Diese Verbindungen zeigen in anwendungstechnischen Tests bemerkenswerte Schaumeigenschaften.

Dabei war es dem Fachmann bekannt, daß bei diesen bekannten Carbosilanen innerhalb von Gruppen mit vergleichbarer Struktur bei abnehmender Anzahl der Siliciumatome, insbesondere bei einer Reduzierung der Anzahl der Siliciumatome von 4 auf 3 oder 2, sich die tensidischen Eigenschaften der Verbindungen verschlechterten. Diese Beobachtung fand ihren Niederschlag in der Theorie von Neumann (A.W. Neumann, D. Renzow, Zeitschrift f. Phys. Chem., new issue 68, 11 (1969)), die besagt, daß für die Erniedrigung der Oberflächenspannung wäßriger Lösungen bis auf unter 30 bis 40 mN/m die permethylierte Oberfläche des Siloxangerüstes verantwortlich ist.

Weiterhin ist auf die japanischen Publikationen von H. Maki et al. in YUKAGAGU 19, No. 4, S. 245 - 251 und YUKAGAGU 19, No. 11, S. 23 ff. - beide aus dem Jahre 1970 - hinzuweisen, in denen definierte Verbindungen der Formel

(CH₃)₃Si(CH₂)₃(C₂H₄O)ₙH und (CH₃(CH₂)₃)₃Si(CH₂)₃(C₂H₄O)ₘH

wobei n = 4,0 oder 7,7 und m = 10 oder 17 ist, beschrieben werden. Diese Verbindungen zeigen in 1 gew.-%iger Lösung aber nur eine Erniedrigung der Grenzflächenspannung auf Werte ≥ 26,5 mN/m.

In diesen japanischen Veröffentlichungen werden ebenfalls quaternäre Stickstoffverbindungen der Formel

Bu₃M(CH₂)₃N⁺(CH₃)₃Cl⁻ (Bu = Butyl, M = Sn, Si)

beschrieben, die zwar bakteriostatisch wirksam sind, jedoch wenig tensidischen Charakter aufweisen. Beste Vertreter dieser quaternären Verbindungen bewirkten in einer 1 %igen wäßrigen Lösung eine Oberflächenspannungserniedrigung auf 32 mN/m.

Der vorliegenden Erfindung liegt die überraschende Erkenntnis zugrunde, daß, im Gegensatz zum allgemeinen Fachwissen, wie es z.B. in der Theorie von Neumann zum Ausdruck kommt, ausgewählte Silane, also Verbindungen mit nur einem einzigen Siliciumatom, bei denen jedoch das Verhältnis der hydrophilen und hydrophoben Molekülteile ausgewogen ist, die Oberflächenspannung von Wasser außerordentlich wirksam erniedrigen und dabei im Gegensatz zu den Siloxantensiden auch in sauren und alkalischen Medien über Tage und Wochen hydrolysestabil sind. Ein weiterer und nicht vorhersehbarer Vorteil der erfindungsgemäßen Silane ist deren vollständige biologische Abbaubarkeit, die sie für ihre Anwendung als Tenside besonders geeignet macht. Ein solches Eigenschaftsprofil ließ sich aus dem Stand der Technik nicht herleiten und widerspricht den bisher üblichen Annahmen über die strukturellen Anforderungen, die siliciumorganische Verbindungen erfüllen sollten, um in wäßrigen Systemen grenzflächenspannungserniedrigende Eigenschaften zu zeigen.

Ein Gegenstand der vorliegenden Erfindung sind deshalb Silane der allgemeinen Formel 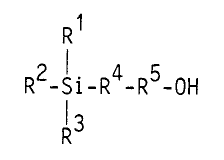 wobei
- R¹, R² und R³: im Molekül gleich oder verschieden sind und aliphatische Kohlenwasserstoffreste bedeuten,
- R⁴: ein zweiwertiger Kohlenwasserstoffrest mit 3 bis 14 Kohlenstoffatomen ist,
- R⁵: ein Rest der Formel -O(CH₂)_{b}⁻ oder ein Polyetherrest der Formel -(OCₙH₂ₙ)_{c}- ist, wobei
b einen Wert von 1 bis 6,
n einen mittleren Wert von 2 bis 2,5 und
c einen Wert von 1 bis 10 hat,
und die Bedingung erfüllen, daß sie die Oberflächenspannung einer 1 gew.-%igen wäßrigen Lösung auf einen Wert von ≤ 25 mN/m bei 25°C, gemessen mit einem Du-Noüy-Tensiometer, erniedrigen.

Beispiele für bevorzugte Reste R¹, R² und R³ sind Methyl-, Ethyl-, Propyl- oder Butylreste.

Vorzugsweise sind mindestens 90 % der Reste R¹, R² und R³ Methylreste.

R⁴ ist ein zweiwertiger Kohlenwasserstoffrest mit 3 bis 14 Kohlenstoffatomen, wie beispielsweise -C₃H₆-, -C₅H₁₀-, -C₆H₁₂- oder -C₁₁H₂₂-Reste. Die Reste R⁴ können substituiert sein, z.B. durch seitenständige Alkylgruppen oder Halogenreste. Bevorzugt sind jedoch die linearen Kohlenwasserstoffreste.

Weitere Beispiele für Reste R⁴ sind Reste der Formel

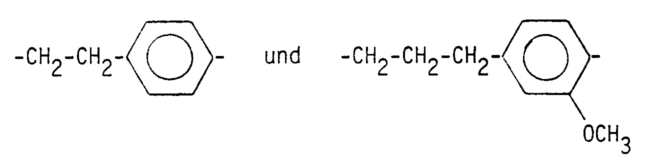

Vorzugsweise ist R⁴ ein zweiwertiger aliphatischer Kohlenwasserstoffrest mit 3 bis 9 Kohlenstoffatomen, insbesondere mit 3 bis 6 Kohlenstoffatomen.

R⁵ ist ein Rest der Formel -O(CH₂)_{b}- oder ein Polyetherrest der Formel -(OCₙH₂ₙ)_{c}-, wobei b einer Wert von 1 bis 6, n einen mittleren Wert von 2 bis 2,5 und c einen Wert von 1 bis 10 hat. Beispiele solcher Reste sind die Reste -OCH₂-, -O(CH₂)₄-, -O(CH₂)₆-, -(OC₂H₄)₈-, -(OCH(CH₃)CH₂)₅-.

n hat vorzugsweise einen Wert von 2,0, so daß in diesem Falle alle Oxyalkyleneinheiten Oxyethyleneinheiten sind. Der Index c gibt die Anzahl dieser Einheiten an und hat einen Wert von 1 bis 10, vorzugsweise von 3 bis 6.

Beispiele erfindungsgemäßer Silane sind

(CH₃)₃Si(CH₂)₃-OCH₂CH₂-OH ; (CH₃)₃Si(CH₂)₆-O-[ CH₂CH₂O- ]₄H ;

(CH₃)₃Si(CH₂)₆-O-[ CH₂CH₂O- ]₂H ; (CH₃)₃Si(CH₂)₆-O-[ CH₂CH₂O- ]₆H

Ein weiterer Gegenstand der Erfindung ist die Herstellung der erfindungsgemäßen Verbindungen. Die Verbindungen können dadurch hergestellt werden, daß man an Silane der allgemeinen Formel 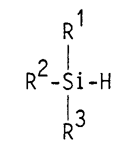 jeweils in Gegenwart eines an sich bekannten Hydrosilylierungskatalysators
a) Verbindungen der allgemeinen Formel

   CH₂=CH-R⁶-R⁵-OH

   wobei
   - R⁶: ein zweiwertiger aliphatischer Kohlenwasserstoffrest mit 1 bis 12 Kohlenstoffatomen ist, oder
b) Verbindungen der allgemeinen Formel

   CH₂=CH-R⁶-OH

   anlagert, und im Falle der Verfahrensvariante b) an die endständige Hydroxylgruppe c Mol Alkylenoxide der allgemeinen Formel 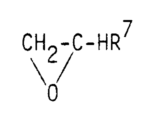 wobei
   - R⁷: ein Wasserstoffrest oder ein Alkylrest mit 1 oder 2 Kohlenstoffatomen ist und die Alkylenoxide im Mittel 2 bis 2,5 Kohlenstoffatome aufweisen,
   in Gegenwart eines alkalischen Katalysators oder einer Lewis-Säure addiert.

R⁶ ist vorzugsweise ein zweiwertiger Kohlenwasserstoffrest mit 1 bis 7, insbesondere 1 bis 4 Kohlenstoffatomen.

Als Alkylenoxide werden insbesondere Ethylenoxid und Propylenoxid eingesetzt. Eine äquimolare Mischung beider Alkylenoxide führt somit zu Produkten, bei denen n einen Wert von 2,5 hat. Es besteht auch die Möglichkeit, in kleineren Mengen Butylenoxid mitzuverwenden, jedoch muß die Bedingung eingehalten werden, daß n nicht größer als 2,5 sein darf.

Zur Anlagerung von Alkylenoxiden an die endständige OH-Gruppe der Silane sind die bekannten Katalysatoren geeignet. Als alkalische Katalysatoren kann man NaOH oder KOH oder deren Alkoholate, insbesondere Na- oder K-Methylat verwenden. Als Lewis-Säure ist BF₃-Etherat besonders bevorzugt. Lagert man verschiedene Alkylenoxide an, kann man die entsprechenden Alkylenoxidgemische einsetzen und erhält Produkte mit statistischer Verteilung der Oxyalkyleneinheiten. Man kann die unterschiedlichen Alkylenoxide auch nacheinander anlagern, wobei man eine blockweise Anordnung der Oxyalkyleneinheiten erhält. Die Anlagerung der Alkylenoxide erfolgt vorzugsweise bei erhöhtem Druck in einem geschlossenen Gefäß.

Zur Optimierung der grenzflächenaktiven Eigenschaften der erfindungsgemäßen Verbindungen müssen deren hydrophile und hydrophobe Molekülteile in einem ausgewogenen Verhältnis vorliegen. Die hydrophoben Eigenschaften können durch die Reste R¹, R², R³ und R⁴ beeinflußt werden. Je kohlenstoffreicher die Reste sind, desto hydrophober ist das erfindungsgemäße Silan. Die Hydrophilie wird durch den Rest R⁵ und insbesondere durch den Wert des Index n und c bestimmt. Je niedriger innerhalb des angegebenen Bereiches der Zahlenwert von n und je höher der Zahlenwert von ist, um so hydrophiler ist das Silantensid. Diese Beeinflussung der tensidischen Eigenschaften wird in den Beispielen noch näher erläutert und damit für den Fachmann leicht verständlich. Zur Erzielung der gewünschten Eigenschaften, insbesondere der Erzielung der gewünschten Oberflächenspannungserniedrigung wäßriger Medien bedarf es somit nur einiger zumutbarer Vorversuche, die keinerlei erfinderischen Zutuns bedürfen.

Die Hydrosilylierung führt man vorzugsweise bei erhöhter Temperatur bis zu etwa 130°C und in Gegenwart eines Katalysators durch. Geeignete Katalysatoren sind insbesondere Platinkatalysatoren. Derartige Hydrosilylierungsreaktionen sind dem Fachmann geläufig.

Ein weiterer Gegenstand der Erfindung ist die Verwendung der erfindungsgemäßen Silane als Tenside in wäßrigen Medien. Es ist dabei möglich, durch Zugabe von 1 Gew.-% erfindungsgemäßer Verbindungen die Oberflächenspannung wäßriger Lösungen auf Werte bis zu etwa 22 mN/m zu erniedrigen. Dabei ist die biologische Abbaubarkeit der erfindungsgemäßen Verbindungen von ganz besonderer Bedeutung. Sie wird ergänzt durch die Hydrolysestabilität der Silantenside.

Wichtige Einsatzmöglichkeiten der erfindungsgemäßen Silantenside sind u.a.:
als Netzmittel:
   in Zubereitungen zur Behandlung von Pflanzen (Agroformulierungen); zur Verbesserung der Benetzung niederenergetischer Substrate, wie etwa Polyethylen-, Polypropylenoberflächen; für die Anwendung in der Lackindustrie; bei der Herstellung photografischer Filme; in der Galvanotechnik;
als Dispergiermittel:
   für Dispersionsfarbstoffe, Pigmente und Füllstoffe;
als Emulgiermittel oder Zusatzstoffe in der Textilindustrie zur Herstellung von Textilhilfsmitteln, Avivagen, Gleitmitteln, antistatischen Zubereitungen; als Färbereihilfsmittel; als Tenside allgemein:
   zur Verwendung in Feuerlöschmitteln; als Schaumstabilisatoren; als grenzflächenaktive Zusätze für Schnelldrucktinten, Klebstoffe, Dispersionsklebstoffe, Schmelzkleber; Verwendung in Waschmitteln; als Zusatzstoffe für technische Reiniger;
als Rohstoffe für die Verwendung in der Kosmetik, z.B. in Pflegemitteln, Shampoos, Duschbädern;
in technischen Anwendungen und im Haushalt:
   als Antibeschlagmittel; zur Verwendung in Geschirrspülmitteln, Waschmitteln, WC-Reinigern, Selbstglanzemulsionen.

Die Herstellung der erfindungsgemäßen Verbindungen und deren Eigenschaften werden in den folgenden Beispielen noch näher erläutert.

### Beispiel 1

### a) Herstellung von [6-Hydroxyhexyl]trimethylsilan (nicht erfindungsgemäßes Zwischenprodukt)

In einen 300-ml-Laborautoklaven werden 28,7 g 1-Hexen-5-ol (0,287 Mol) und 3 mg Platinkatalysator eingewogen. Der Autoklav wird nun samt Inhalt unter Argon-Schutzgasbedampfung in einem Aceton/Trockeneisbad gekühlt, und 22,4 g Trimethylsilan (0,299 Mol, Kp. 6,7°C) werden aus kondensierter Phase übergehebert. Der Autoklav wird verschlossen und auf 130°C geheizt. Dabei steigt der Innendruck bis auf 13,7 bar an, um dann auf ca. 5,7 bar wieder abzufallen, was eine Reaktion signalisiert.

Nach der Entspannung des Autoklaven, die nach dem Abkühlen auf Raumtemperatur erfolgt, wird der Inhalt durch Filtration vom Platinkatalysator befreit (Auswaage: 50,7 g, Masseverlust: 0,9 g).
Hydroxylzahl: Theorie 321,7 Praxis 306,0

Die ²⁹Si-NMR- und ¹H-NMR-spektroskopische Analyse ergibt folgende Produktstruktur:

(CH₃)₃Si(CH₂)₆OH

Das Produkt wird im Ölpumpenvakuum bei 20°C von niedrigflüchtigen Bestandteilen befreit.

### b) Herstellung eines [Polyoxyethylen]trimethylsilans durch Ethoxylierung von [Hydroxyhexyl]trimethylsilan (erfindungsgemäß)

In einem Dreihalskolben, der mit einem Intensivkühler, Thermometer, Kühlmanteltropftrichter sowie einem Stickstoffanschluß ausgerüstet ist, werden 20,0 g (0,11 Mol) Hydroxyhexyltrimethylsilan und 0,82 g einer 50 %igen Bortrifluorid-Etherat-Lösung vorgelegt. Dann werden 21,1 g (0,48 Mol) einkondensiertes Ethylenoxid langsam zugetropft. Der exothermen Reaktion wird mit einem Eisbad entgegengewirkt, so daß die Innentemperatur 20 bis 30°C nicht überschreitet. Danach wird noch zwei Stunden bei Raumtemperatur nachgerührt, und nach Neutralisation mit 1,50 g Natriumhydrogencarbonat und 0,41 g Wasser (1 Gew.-%) werden die flüchtigen Bestandteile im Wasserstrahlvakuum bei 90°C aus dem Produkt entfernt.

Die anschließende Filtration unter vorheriger Zugabe von Filterhilfsmitteln ergibt ein schwach gelb gefärbtes, klares Produkt, das gemäß ¹H-Spektroskopie sowie der GPC 4,2 Oxyalkyleneinheiten aufweist und demnach in folgender mittlerer Formel wiedergegeben werden kann:

(CH₃)₃Si-(CH₂)₆-O-[ CH₂CH₂O ]_{4,2}-H

Dieses Produkt wird 1 bzw. 0,1 gew.-%ig mit destilliertem Wasser als Lösung angesetzt, und nach 24stündiger Lagerung werden diese Lösungen hinsichtlich ihrer Spreitfähigkeit (50-µl-Tropfen) auf Polypropylenfolie untersucht.

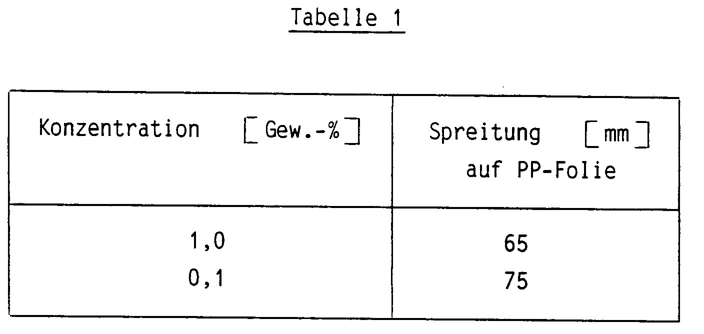

Nach obiger Verfahrensweise werden ausgehend von [Hydroxyhexyl]trimethylsilan, [Hydroxypropyl]trimethylsilan sowie [Hydroxyundecyl]trimethylsilan durch Variation der Anzahl und der Art der Oxyalkyleneinheiten erfindungsgemäße Verbindungen hergestellt, deren Eigenschaften in den folgenden Tabellen gezeigt werden:

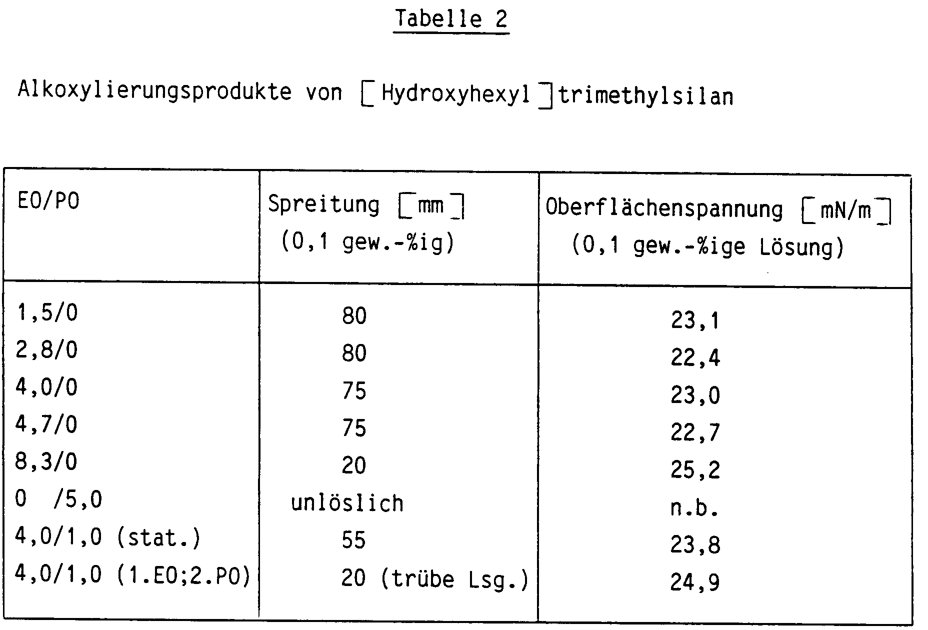

Die Abkürzung "stat." bedeutet, daß Ethylenoxid und Propylenoxid in Form einer Mischung angelagert werden, so daß eine statistische Verteilung der Alkylenoxide erfolgt.

Der Ausdruck "1.EO;2.PO" bedeutet, daß zunächst die angegebene Menge Ethylenoxid und anschließend die angegebene Menge Propylenoxid angelagert wird. Hierbei entsteht eine blockweise Verteilung der Oxyalkyleneinheiten.

Die Abkürzung "n.b." bedeutet "nicht bestimmbar".

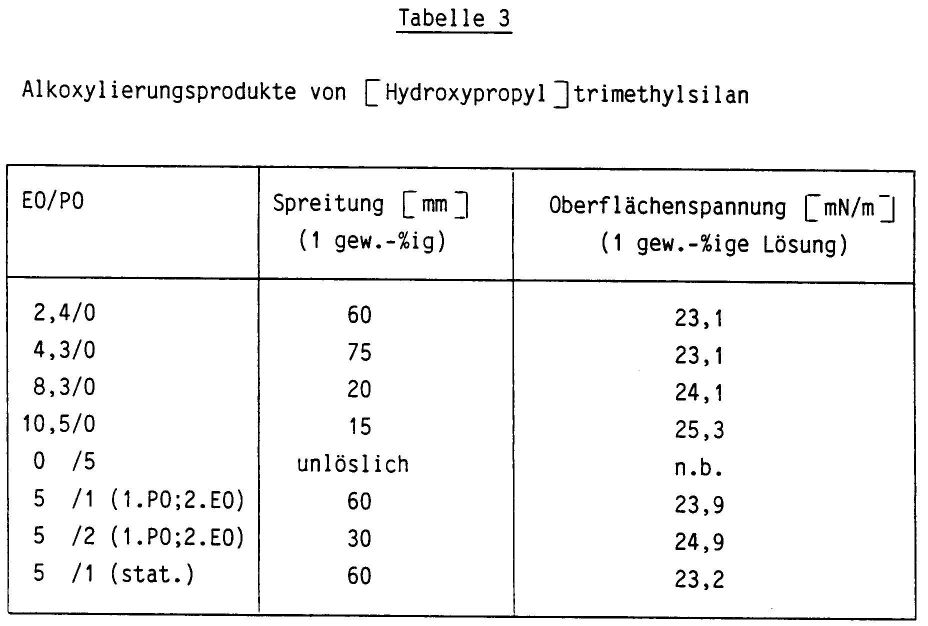

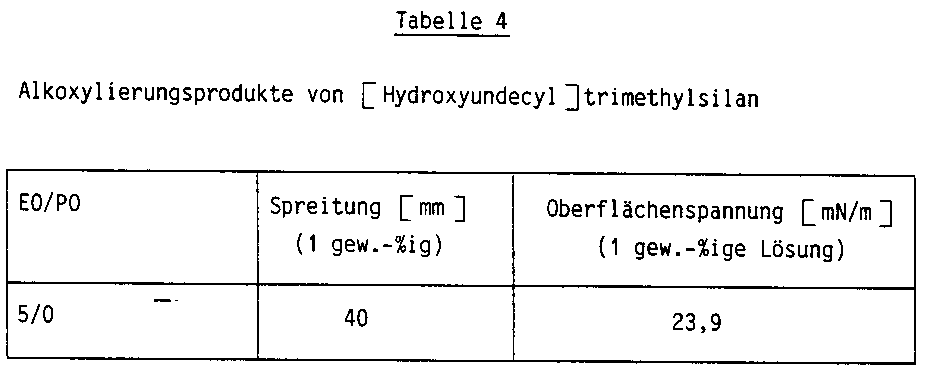

### Beispiel 2

### Herstellung eines [Polyoxyalkylen]trimethylsilans der Formel (CH₃)₃Si(CH₂)₆[ OCH₂CH₂ ]₄OH durch Hydrosilylierung (erfindungsgemäß)

In einen 300-ml-Laborautoklaven werden 88,14 g Hexenylpolyether der Formel CH₂=CH(CH₂)₄[ OCH₂CH₂ ]₄OH (0,3 Mol, Hydroxylzahl 203,4, Iodzahl 86,4) und 5 mg Platinkatalysator eingewogen. Der Autoklav wird nun samt Inhalt unter Argon-Schutzgasbedampfung in einem Aceton/Trockeneisbad gekühlt, und 23,34 g Trimethylsilan (0,315 Mol) werden übergehebert. Der Autoklav wird verschlossen und auf 130°C geheizt. Dabei steigt der Innendruck bis auf 8,0 bar an, um dann auf ca. 3,5 bar wieder abzufallen.

Nach der Entspannung des Autoklaven, die nach dem Abkühlen auf Raumtemperatur erfolgt, wird der Inhalt durch Filtration vom Platinkatalysator befreit (Auswaage: 109,0 g, Masseverlust: 0,6 g).

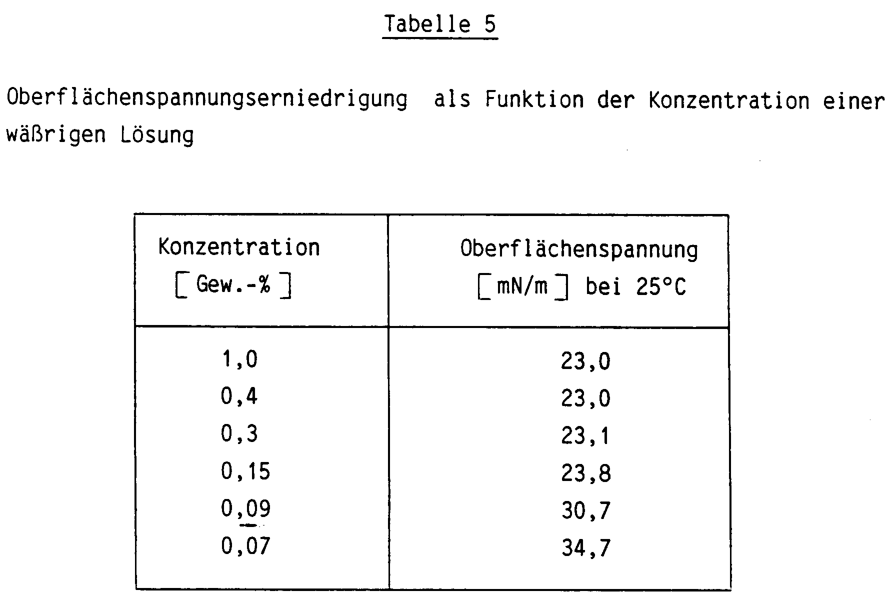

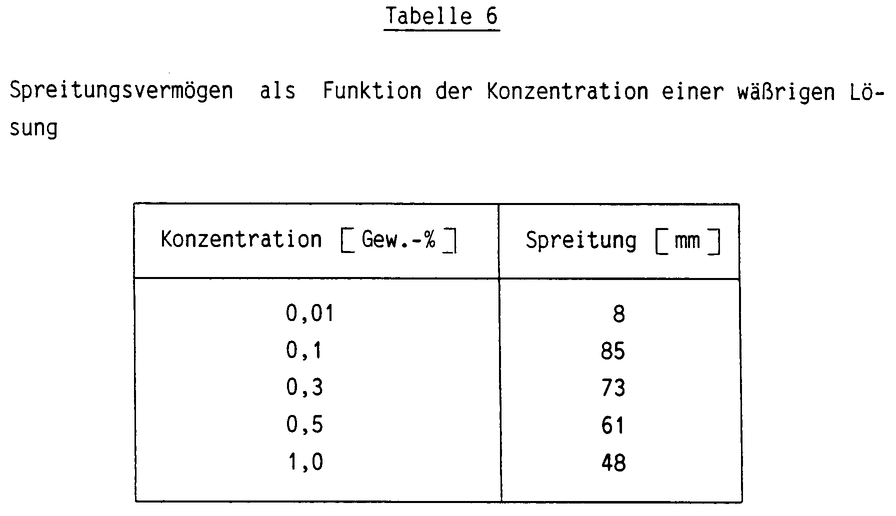

Es zeigt sich ein konzentrationsabhängiges Maximum bei einer Konzentration von 0,1 Gew.-%.

### Beispiel 3

### Herstellung weiterer erfindungsgemäßer Verbindungen und deren Eigenschaften

Es werden, wie in den vorangegangenen Beispielen beschrieben, folgende Verbindungen hergestellt:

| | |
|---|---|
| TMS-PE 1 = TMS-C₃-O-CH₂CH₂OH | TMS = Trimethylsilylrest |
| TMS-PE 2 = TMS-C₆-O-[CH₂CH₂O]₂H | |
| TMS-PE 3 = TMS-C₆-O-[CH₂CH₂O]₄H | |
| TMS-PE 4 = TMS-C₆-O-[CH₂CH₂O]₆H | |

Es werden zunächst jeweils wäßrige Lösungen mit einer Konzentration von 1 Gew.-% Produkt zubereitet und deren Oberflächenspannung nach der Du-Noüy-Methode ermittelt. Zur Ermittlung des Netzvermögens wird die Spreitung eines 50-µl-Tropfens der 1 %igen Tensidlösung auf einer Polypropylenfolie über die maximale Flächenausdehnung gemessen. Reines Wasser liefert unter diesen Bedingungen einen Blindwert von 8 mm. Die Langzeithydrolysestabilität wird ebenfalls durch Beobachtung der Netzeigenschaft einer 1-%-Lösung verfolgt.

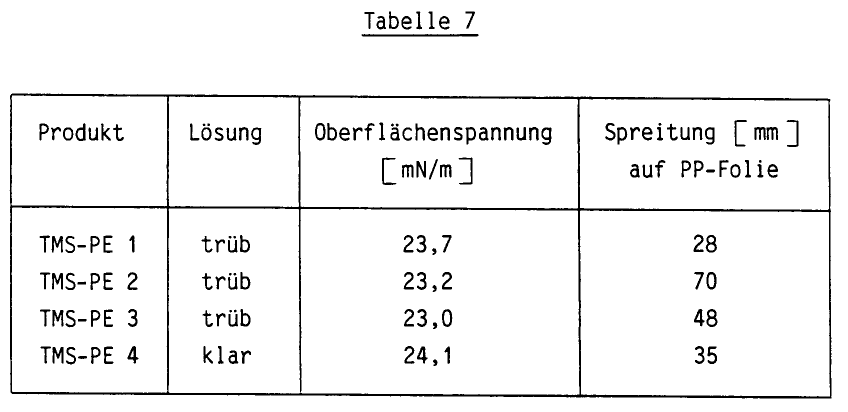

### Beispiel 4

### Biologische Abbaubarkeit von erfindungsgemäßen Verbindungen

Die biologische Abbaubarkeit des Produktes aus Beispiel 1 b) wird in Anlehnung an die OECD-Richtlinie (OECD 301 D) geprüft.

Sie beträgt unter den Bedingungen des Prüfungsverfahrens 88 % BSB (biologischer Sauerstoffbedarf = biological oxygen demand BOD) von CSB (chemischer Sauerstoffbedarf = chemical oxygen demand COD) nach 28 Tagen. Die Gültigkeit dieses Ergebnisses erfolgt zwanglos aus der Tatsache, daß die Kontrollsubstanz Natriumacetat im gleichen Zeitraum zu mehr als 60 % abgebaut wird.

## Patentansprüche

1. Silane der allgemeinen Formel 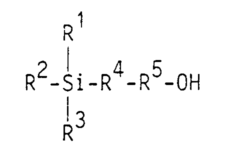 wobei
R¹, R² und R³ im Molekül gleich oder verschieden sind und aliphatische Kohlenwasserstoffreste bedeuten,
R⁴ ein zweiwertiger Kohlenwasserstoffrest mit 3 bis 14 Kohlenstoffatomen ist,
R⁵ ein Rest der Formel -O(CH₂)_{b}- oder ein Polyetherrest der Formel -(OCₙH₂ₙ)_{c}- ist, wobei
b einen Wert von 1 bis 6,
n einen mittleren Wert von 2 bis 2,5 und
c einen Wert von 1 bis 10 hat,
und die Bedingung erfüllen, daß sie die Oberflächenspannung einer 1 gew.-%igen wäßrigen Lösung auf einen Wert von ≤ 25 mN/n bei 25°C, gemessen mit einem Du-Noüy-Tensiometer, erniedrigen.

2. Silane nach Anspruch 1, dadurch gekennzeichnet, daß R¹, R² und R³ Alkylreste mit 1 bis 4 Kohlenstoffatomen sind.

3. Silane nach Anspruch 2, dadurch gekennzeichnet, daß mindestens 90 % der Reste R¹, R² und R³ Methylreste sind.

4. Silane nach einem oder mehreren der vorhergehenden Ansprüche, dadurch gekennzeichnet, daß der Rest R⁴ ein zweiwertiger aliphatischer Kohlenwasserstoffrest mit 3 bis 14 Kohlenstoffatomen ist.

5. Silane nach Anspruch 4, dadurch gekennzeichnet, daß der Rest R⁴ ein zweiwertiger aliphatischer Kohlenwasserstoffrest mit 3 bis 9 Kohlenstoffatomen ist.

6. Silane nach Anspruch 5, dadurch gekennzeichnet, daß der Rest R⁴ ein zweiwertiger aliphatischer Kohlenwasserstoffrest mit 3 bis 6 Kohlenstoffatomen ist.

7. Silane nach einem oder mehreren der vorhergehenden Ansprüche, dadurch gekennzeichnet, daß der Rest R⁵ ein Polyetherrest ist, bei welchem n einen Wert von 2 und c einen Wert von 3 bis 6 hat.

8. Verfahren zur Herstellung der Silane nach den Ansprüchen 1 bis 7, dadurch gekennzeichnet, daß man an Silane der allgemeinen Formel 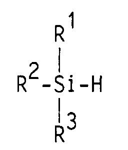 jeweils in Gegenwart eines an sich bekannten Hydrosilylierungskatalysators
a) Verbindungen der allgemeinen Formel
CH₂=CH-R⁶-R⁵-OH
wobei
R⁶ ein zweiwertiger aliphatischer Kohlenwasserstoffrest mit 1 bis 12 Kohlenstoffatomen ist, oder
b) Verbindungen der allgemeinen Formel
CH₂=CH-R⁶-OH
anlagert, und im Falle der Verfahrensvariante b) an die endständige Hydroxylgruppe c Mol Alkylenoxide der allgemeinen Formel 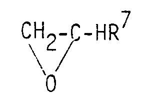 wobei
R⁷ ein Wasserstoffrest oder ein Alkylrest mit 1 oder 2 Kohlenstoffatomen ist und die Alkylenoxide im Mittel 2 bis 2,5 Kohlenstoffatome aufweisen,
in Gegenwart eines alkalischen Katalysators oder einer Lewis-Säure addiert.

9. Verfahren nach Anspruch 8, dadurch gekennzeichnet, daß man die Hydrosilylierung bei erhöhter Temperatur und/oder in Gegenwart eines Lösungsmittels durchführt.

10. Verfahren nach Anspruch 8 oder 9, dadurch gekennzeichnet, dab man die Hydrosilylierung in gegenwart eines Platinkatalysators durchfurt.

11. Verwendung der Silane nach Anspruch 1 als biologisch abbaubare, hydrolysestabile Tenside in Wasser enthaltenden Medien.

## Claims

1. Silanes of the general formula 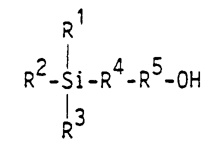 where
R¹, R² and R³ are identical or different in the molecule and are aliphatic hydrocarbon radicals,
R⁴ is a divalent hydrocarbon radical having from 3 to 14 carbon atoms,
R⁵ is a radical of the formula -O(CH₂)_{b}- or a polyether radical of the formula -(OCₙH₂ₙ)_{c}-, where
b is from 1 to 6,
n has a mean value of from 2 to 2.5 and
c is from 1 to 10,
which meet the condition that they reduce the surface tension of a 1% strength by weight aqueous solution to a value of ≤ 25 mN/m at 25°C, measured using a Du-Noüy tensiometer.

2. Silanes according to Claim 1, characterized in that R¹, R² and R³ are alkyl radicals having from 1 to 4 carbon atoms.

3. Silanes according to Claim 2, characterized in that at least 90% of the radicals are R¹, R² and R³ are methyl radicals.

4. Silanes according to one or more of the preceding claims, characterized in that the radical R⁴ is a divalent aliphatic hydrocarbon radical having from 3 to 14 carbon atoms.

5. Silanes according to Claim 4, characterized in that the radical R⁴ is a divalent aliphatic hydrocarbon radical having from 3 to 9 carbon atoms.

6. Silanes according to Claim 5, characterized in that the radical R⁴ is a divalent aliphatic hydrocarbon radical having from 3 to 6 carbon atoms.

7. Silanes according to one or more of the preceding claims, characterized in that the radical R⁵ is a polyether radical in which n is 2 and c is from 3 to 6.

8. Process for preparing the silanes according to any of Claims 1 to 7, characterized in that
a) compounds of the general formula
CH₂=CH-R⁶-R⁵OH
where
R⁶ is a divalent aliphatic hydrocarbon radical having from 1 to 12 carbon atoms, or
b) compounds of the general formula
CH₂=CH-R⁶-OH
are added onto silanes of the general formula 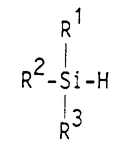 in each case in the presence of a hydrosilylation catalyst known per se, and in the case of process variant b), c mol of alkylene oxides of the general formula 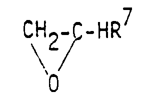 where
R⁷ is hydrogen or an alkyl radical having 1 or 2 carbon atoms and the alkylene oxides have an average of from 2 to 2.5 carbon atoms,
are added onto the terminal hydroxyl group in the presence of an alkaline catalyst or a Lewis acid.

9. Process according to Claim 8, characterized in that the hydrosilylation is carried out at elevated temperature and/or in the presence of a solvent.

10. Process according to Claim 8 or 9, characterized in that the hydrosilylation is carried out in the presence of a platinum catalyst.

11. Use of the silanes according to Claim 1 as biodegradable, hydrolysis-stable surfactants in water-containing media.

## Revendications

1. Silanes de formule générale : 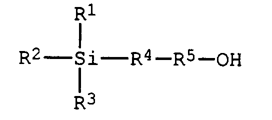 dans laquelle :
R¹, R² et R³ sont identiques ou différents dans la molécule et signifient des radicaux hydrocarbonés aliphatiques;
R⁴ est un radical hydrocarboné divalent de 3 à 14 atomes de carbone;
R⁵ est un radical de formule -O(CH₂)_{b}- ou un radical polyéther de formule -(OCₙH₂ₙ)_{c}-, dans lesquelles
b vaut de 1 à 6;
n a une valeur moyenne de 2 à 2,5, et
c vaut de 1 à 10,
et qui satisfont à la condition qu'ils réduisent la tension superficielle d'une solution aqueuse à 1% à une valeur ≤ 25 mN/m à 25°C, mesurée avec un tensiomètre Du-Noüy.

2. Silanes suivant la revendication 1, caractérisés en ce que R¹, R² et R³ sont des radicaux alkyle de 1 à 4 atomes de carbone.

3. Silanes suivant la revendication 2, caractérisés en ce qu'au moins 90% des radicaux R¹, R² et R³ sont des radicaux méthyle.

4. Silanes suivant une ou plusieurs des revendications précédentes, caractérisés en ce que le radical R⁴ est un radical hydrocarboné aliphatique divalent de 3 à 14 atomes de carbone.

5. Silanes suivant la revendication 4, caractérisés en ce que le radical R⁴ est un radical hydrocarboné aliphatique divalent de 3 à 9 atomes de carbone.

6. Silanes suivant la revendication 5, caractérisés en ce que le radical R⁴ est un radical hydrocarboné aliphatique divalent de 3 à 6 atomes de carbone.

7. Silanes suivant une ou plusieurs des revendications précédentes, caractérisés en ce que le radical R⁵ est un radical polyéther dans lequel n vaut 2 et c vaut 3 à 6.

8. Procédé de préparation des silanes suivant les revendications 1 à 7, caractérisé en ce que, à des silanes de formule générale : 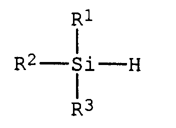 dans chaque cas en présence d'un catalyseur d'hydrosilylation connu en soi, on additionne
a) des composés de formule générale
CH₂=CH-R⁶-R⁵-OH
dans laquelle
R⁶ est un radical hydrocarboné aliphatique divalent de 1 à 12 atomes de carbone, ou
b) des composés de formule générale
CH₂=CH-R⁶-OH
et, dans le cas de la variante de procédé b), on ajoute sur le groupement hydroxyle en fin de chaîne c moles d'oxyde d'alkylène de formule générale : 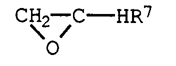 dans laquelle
R⁷ est un radical hydrogène ou un radical alkyle de 1 ou 2 atomes de carbone, et dans laquelle les oxydes d'alkylène présentent en moyenne 2 à 2,5 atomes de carbone,
en présence d'un catalyseur alcalin ou d'un acide de Lewis.

9. Procédé suivant la revendication 8, caractérisé en ce que l'on réalise l'hydrosilylation à température élevée et/ou en présence d'un solvant.

10. Procédé suivant la revendication 8 ou 9, caractérisé en ce que l'on réalise l'hydrosilylation en présence d'un catalyseur au platine.

11. Utilisation des silanes suivant la revendication 1 comme agents tensioactifs biodégradables, stables à l'hydrolyse, dans des milieux aqueux.
